# EUROPEAN PATENT SPECIFICATION

(11) **EP 1 111 018 B1**
(45) Date of publication and mention of the grant of the patent: **28.04.2010**
(21) Application number: 00311429.5
(22) Date of filing: 20.12.2000
(51) Int. Cl.: C09D 11/16, C09D 5/36

(54) **Aqueous glittering ink**
Wässrige glitzernde Tinte
Encre aqueuse scintillante

(30) Priority: 20.12.1999 JP 36018799; 11.01.2000 JP 2000002344; 15.03.2000 JP 2000071999; 19.09.2000 JP 2000282779
(43) Date of publication of application: 27.06.2001
(73) Proprietor: SAKURA COLOR PRODUCTS CORPORATION, Osaka-shi, Osaka-fu (JP)
(72) Inventor: Yoshimura, Yasuyuki, Chuo-ku, Osaka-shi, Osaka-fu (JP); Murata, Naoshi, Chuo-ku, Osaka-shi, Osaka-fu (JP); Yamamoto, Yuki, Chuo-ku, Osaka-shi, Osaka-fu (JP); Sawa, Tomohiro, Chuo-ku, Osaka-shi, Osaka-fu (JP)
(74) Representative: Humphreys, Ceris Anne

(56) References cited:
- EP-A- 0 600 205
- US-A- 5 445 671
- US-A- 5 556 527
- ZEBRA CO LTD: "WPI WORLD PATENT INFORMATION DERWENT,DERWENT,GB" , WPI WORLD PATENT INFORMATION DERWENT,DERWENT,GB, VOL. 1993, NR. 24 XP002157347 * abstract *

## Description

### Field of the Invention

The present invention relates to an aqueous glittering ink which can be suitably used for writing tools, printing inks, fields pertaining to coatings, cosmetics, and the like.

### Description of the Prior Art

Heretofore, for the purpose of obtaining written marks with metallic luster (metallic tone) such as gold and silver, aqueous inks using glittering pigments have been proposed. For example, Japanese Unexamined Patent Publication Hei 7-118592 proposes an aqueous ink using an aluminum powder pigment. Japanese Unexamined Patent Publication Hei 8-151547 proposes an ink using a pearlescent pigment. Japanese Unexamined Patent Publication Hei 11-29734 proposes an aqueous metallic ink prepared by coloring an aluminum powder with an organic pigment.

However, in the case of such conventional aqueous inks using glittering pigments such as aluminum powder pigment, pearlescent pigment and the like, although handwritings or coated films with metallic tones of such color tones including red, blue, and the like can be realized, it has been difficult to obtain written marks or coated films glittering with strong glittering feeling (effect) and spatial effect in a dimension different from the original color tones. Moreover, although in order to obtain, in particular, colored metallic color, a method has been adopted in which these glittering pigment particles are colored with coloring materials such as dyes and pigments, there has been a problem that the glittering feeling is lost despite the improvement in color development.

### SUMMARY OF THE INVENTION

As a result of intensive studies for achieving the said objects, the present inventors have provided an aqueous glittering ink comprising scaly glittering particles, a colorant, a water-soluble thickening resin, a water-soluble organic solvent, and water, wherein the said scaly glittering particles have a median diameter of at least 10µm and a metal surface, the scaly glittering particles are aluminum particles, and the ratio of smoothness of the particle surface to the median diameter is at most 0.011, the proportions of the colorant and the glittering particles being such that when a written mark is made by the ink the colorant covers at most 80% of the surface of the particles.

By using the above composition, the present invention can provide written marks or coated films having a stronger glittering feeling and a spatial effect, in that incident light is reflected totally on a smooth metallic surface with a glitter interspersed in written marks or coated films without losing glittering feeling, compared with an aqueous ink using conventional glittering pigments and unlike the conventional written marks or coated films which make color tones metallic.

The glitter can be achieved provided that the scaly glittering particles have a smooth surface. However, as for glittering particles with a small diameter of less than 10µm, the glittering effect is relatively poor. Therefore, it is difficult to obtain written marks or coated films having stronger glittering feeling and a spatial effect that have never been achieved in that a glitter is interspersed in written marks or coated films even though the written marks or coated films can be made metallic in tone. Therefore, the size of a particle diameter also affects the glittering feeling and the median diameter of the said glittering particles is at least 10µm, preferably at least 25µm, preferably not less than 30µm and more preferably over 30µm to 40µm, 50µm. That is, a large-sized glittering particle with a diameter of 30-50µm is preferable.

By adopting the said constituents, written marks or coated films can be obtained with a stronger glittering feeling and a spatial effect which have never been achieved in that a glitter is interspersed in written marks or coated films, as well as a good color development compared with the aqueous ink using the conventional glittering pigments.

And further, as a preferred embodiment of this invention, in addition to the above-mentioned constituents and characteristics there is provided an aqueous ink having pseudo-plasticity fluidity (thixotropic property), preferably an aqueous ink having a thixotropy index (T.I. value ) of not less than 1.3 represented by the ratio of V_{0.5} to V_{1.0} (V_{0.5} /V_{1.0}), wherein V_{0.5} is the viscosity at a rotation speed of 0.5 rpm and V_{1.0} is the viscosity with the rotation speed of 1.0 rpm when the ink is measured by an ELD-type viscometer (3°R14 cone, at the temperature of 20°C), more preferably an aqueous ink having pseudo-plasticity fluidity (thixotropic property) with V_{0.5} of 1000∼15000mPa . s, preferably 1000∼10000mPa . s, the viscosity when measured by the ELD-type viscometer at a rotation speed of 0.5rpm(3°R14 cone at the temperature of 20°C).

By preparing the aqueous ink having the said constituents, even in the case of containing the scaly glittering particles with the said parameters having quite a large particle size compared with that of the normal coloring pigments, it is capable of controlling the dispersal stability of the said particles in the ink and is capable of preventing the sedimentation of the scaly glittering particles. Therefore, even in the case of applying the ink of this invention to the ink for a ball-point pen, for example, it is capable of showing the excellent glittering feeling of the glittering particles and the strong color development of the colorants at a time, while showing the stability and good writing performance since it can prevent the clogging of the glittering particles with the said large particle diameters at the pen tip.

The object of this invention is to provide an aqueous glittering ink having a stronger glittering feeling and spatial effect that have never been achieved in that a glitter is interspersed in written marks or coated films, without losing glitter, compared with an aqueous ink using conventional glittering pigments and unlike the conventional written marks or coated films which give a metallic tone.

Another object of this invention is to provide an aqueous glittering ink having a stronger glittering feeling and spatial effect that have never been achieved in that a glitter is interspersed in written marks or coated films, without losing glitter, compared with an aqueous ink using conventional glittering pigments and unlike the conventional written marks or coated films which make metallic tone, while achieving better color development of colorants.

Further, the other object of this invention is to provide a glittering aqueous ink capable of showing the glittering feeling of the glittering particles and the color development of the colorants at a time, while maintaining the stability and good writing performance of the ink.

### BRIEF DESCRIPTION OF DRAWING

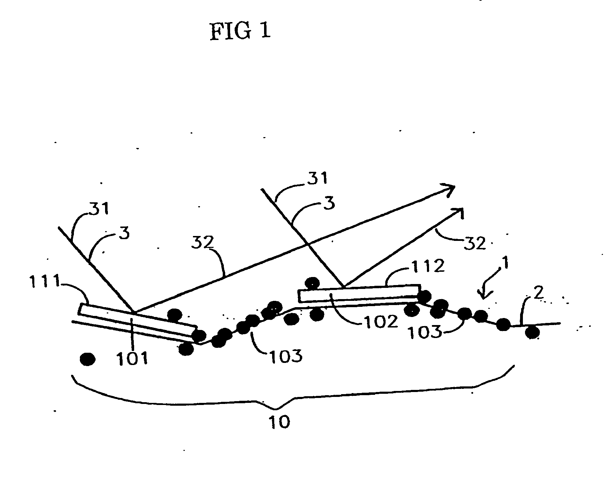

Figure 1 is the schematic sectional view showing the typical example of written marks when writing with the ink by the said writing method.

### DESCRIPTION OF THE PREFERRED EMBODIMENT

### (Scaly glittering particles)

As the scaly glittering particles, there are used aluminum particles having a median diameter of at least 10µm. To be concrete, examples that follow include aluminum particles whose particle surface is a smooth surface, whilst comparative examples are also set forth having glass flake particles having a smooth metallic surface. In addition, as the scaly glittering particles, it is important to have such particles having a smooth metal surface (mirror surface) on a particle surface, a median diameter of at least 10µm, a ratio of smoothness on the particle surface to a median diameter of not greater than 0.011, and a surface coating ratio of the said colorant on the particle surface of not greater than 80% in a state of dried written marks.

The "glittering particles" in this invention refer to the particles which realize the glittering feeling on dried written marks or coated films, more concretely, referring to those particles with the said parameters.

Here, the said "median diameters" are the D₅₀ value (µm) measured by laser diffraction analysis using an equipment manufactured by Leeds & Northrup under the trade name of "Microtrac HRA 9320-X100 ". In addition, the said smoothness is the average value of R ₘₐₓ (µm) the maximum value of roughness measured on each surface of the several glittering particles which exist per unit area of the written marks or coated films in a state of dryness by using the electron microscope manufactured by ELIONIX INC. under the trade name of "ERA-8000".

According to this invention, when the ink is written or coated and forms the written marks or coated films, in such written marks or coated films, the larger the median diameters of the D₅₀ value, and the smaller the R ₘₐₓ , the maximum value of the said roughness on the surface, the stronger glittering feeling can be realized. Further, the inventors have found that, when the minimum value of the glittering feeling to which both parameters relate is associated as the ratio of the smoothness (µm) on the particle surface to the said median diameter (µm) of the glittering particles (smoothness (µm) / median diameter (µm)), the realization of the glittering feeling is related to the said ratio, in particular, when the ratio is not greater than 0.011, the glittering feeling is strongly realized.

Further, as above mentioned, it is important for the glittering particles in the present invention to have a surface coating ratio of the said colorant on the particle surface of not greater than 80% in a state of dried written marks. Here, the "surface coating ratio of the colorant" refers to the coating ratio of the colorant including the coloring pigment which covers the surface of a particle and is represented by the coating area of the colorant to the total surface area of the surface of a particle. In the present invention, the coating ratio of the colorant is so obtained as using the electron microscope manufactured by ELIONIX INC. under the trade name of "ERA-8000" as already mentioned, and measuring the average value of the surface area of the said particles and the coating area of the colorant on the several glittering particles existing per area in the written marks or coated films. This "surface coating ratio of the colorant" is the parameter capable of the adjustment, depending on the size , and contained amount of the glittering particles and colorant's particles, dispersability of each particle in the ink, and the viscosity of the ink.

In the case of an aqueous ink wherein the median diameter of the scaly glittering particles is less than 10µm, the glittering feeling on the written marks or coated films is reduced. Even in the case of an aqueous ink wherein the median diameter of the scaly glittering particles is not less than 10µm, when the ratio of smoothness on the particle surface to the said median diameter exceeds 0.011, a glittering feeling on the written marks or coated films is also reduced. In the case of an ink wherein the surface coating ratio of the said colorant coating the surface of the said scaly glittering particles in written marks and coated films marks exceeds 80%, the glittering feeling is also reduced. For information, in the case of the scaly glittering particles whose median diameter is at least 25µm, preferably not less than 30µm, more preferably over 30 to 40µm, 50µm, that is, a larger median diameter of 30∼50µm, the excellent glittering feeling appears in written marks or coated films.

The aqueous ink containing such particles as having a median diameter of at least 10µm, the ratio of smoothness on the particle surface to the said median diameter of not greater than 0.011, and the surface coating ratio of the said colorant on the particle surface of not greater than 80% in a state of dried written marks is capable of forming written marks or coated films with a glittering feeling and a spatial effect which the glittering particles originally have and the good color development which the colorants have.

The aluminum powders used as the scaly glittering particles having a median diameter of at least 10µm, a ratio of smoothness on the particle surface to the said median diameter of not greater than 0.011, and a surface coating ratio of the said colorant on the particle surface of not greater than 80% in a state of dried written marks as above-mentioned, enable the color development of the colorant to be realized while maintaining the starry glitter on the written marks or coated films which the particles originally have. Certain smaller particle size aluminum powders do not have the necessary smoothness to give the glitter required by the invention.

The examples of such aluminum powders capable of providing the said parameter include the ones manufactured by Toyo Aluminium under the trade name of "WXM U75C"(median diameter: 13 µm), "WXM 5422"(median diameter: 18 µm), "WXM 1440" (median diameter: 30 µm), and "WXM 1415" (median diameter: 50 µm). In particular, as aluminum powders, "WXM 1440" (median diameter: 30 µm), and "WXM 1415" (median diameter: 50 µm) whose median diameter is not less than 30 µm, that is, with a median diameter exceeding 25µm can preferably be used.

Here, it is important for the said scaly glittering particles to have a median diameter of at least 10 µm, preferably not less than 25µm and most preferably not less than 30 µm. It is preferable to have a median of 100µm at the maximum. The case in which the median diameter exceeds 100 µm is unfavorable because it does not come out of the pen tip easily when used as an ink for ball-point pens.

In addition, in the aqueous ink of the present invention, the said scaly glittering particles are preferably contained in 0.01 - 40% by weight relative to the total amount of the ink. When the content of the said scaly glittering particles is less than 0.01% by weight relative to the total amount of the ink, the glittering feeling becomes unsatisfactory. When the content of the said scaly glittering particles exceeds 40% by weight relative to the total amount of the ink, the viscosity of the ink becomes so high that the fluidity is reduced. The optimum content of the said scaly glittering particles ranges from 0.5 - 30% by weight.

### (Water-soluble organic solvent)

Water-soluble organic solvents capable of preventing both drying at the pen tip of a ball-point pen and freezing of the ink are preferably used, which can be exemplified by glycols such as ethylene glycol, diethylene glycol, triethylene glycol, propylene glycol and polyethylene glycol, polyhydric alcohols such as glycerin, glycol ethers such as ethylene glycol monomethyl ether, diethylene glycol monomethyl ether, dipropylene glycol monomethyl ether and dipropylene glycol monopropyl ether. These organic solvents may be used alone or in combinations of two or more of them.

The content of the water-soluble organic solvent is preferably contained in 1.00 - 40% by weight relative to the total amount of the ink. When the content of the water-soluble organic solvent is less than 1.00% by weight relative to the total amount of the ink, the pen tip becomes susceptible to dry and the ink becomes liable to freeze. When the content of the water-soluble solvent exceeds 40% by weight relative to the total amount of the ink, written marks or coated films is difficult to dry out as well as solubility of the water-soluble resin being influenced. The optimum content of the water-soluble organic solvent, which varies depending on its type, ranges from 5.00 - 20% by weight.

### (Colorant)

A colorant is used in,the present invention. The use of a colorant can adjust the ink colors to a variety of colors. It is important that such a colorant should be used as does not react with the said scaly glittering particles nor does it influence the color development (glittering feeling) of such scaly glittering particles. Moreover, colorants with high solubility and dispersibility are favorable.

Examples include water-soluble dyes such as acid dyes, direct dyes and basic dyes, inorganic pigments such as carbon black and titanium oxide, organic pigments such as copper phthalocyanine pigments, threne pigments, azo pigments, quinacridon pigments, anthraquinone pigments, dioxane pigments, indigo pigments, thioindigo pigments, perinone pigments, perylene pigments, indolenone pigments and azomethine pigments, and fluorescent pigments, colored resin emulsions and the like can be mentioned. These also may be used in the form of a pigment dispersion. The present invention can use one species of pigment or can use two or more species of pigments in combination. In addition, several scaly glittering particles relating to this invention can be mixed and used. Further, the scaly glittering particles relating to this invention and the conventional glittering pigments can be mixed and used. For example, the aluminum powder pigments and pearlescent pigments and the like can be mixed. Furthermore, they can be mixed with opacifying pigments including a variety of inorganic or organic white pigments such as titanium oxide, alkylene bismelamine derivatives, plastic pigments (synthetic resin particle pigments) with opacifying power of various shapes including spherical shapes, oblate shapes and the like.

The said aqueous inks containing colorants can provide a colored strong glittering feeling depending upon the hue or the like of the colorants contained.

The colorant is preferably contained in 0.01 - 30% by weight relative to the total amount of the ink. When the colorant is less than 0.01% by weight relative to the total amount of the ink, coloring by the colorant is difficult to be visually recognized. When the colorant exceeds 30% by weight in the total amount of the ink, the viscosity of the ink becomes so high that the fluidity becomes poor. The optimum amount of the colorant to be compounded, which varies depending on its type, ranges from 0.05 - 20% by weight.

### (Water-soluble resin)

As a water-soluble resin, preferably used is the water-soluble thickening resin which is capable of dispersing the scaly glittering particles and of preventing them from precipitation. In particular, in order to make a coating ratio of a colorant to the written marks of the said scaly glittering particles not greater than 80%, it is important to adjust the dispersion of the scaly glittering particles and the pigment particles and to adjust the viscosity of the said and as-will-be-seen pseudo-fluidity property (thixotropic property) respectively as a measure, and in this sense, it is important to contain this water-soluble resin in the ink.

Suitable as resins are polysaccharides, for example microbial polysaccharides and derivatives thereof, including pullulan, xanthan gum, welan gum, rhamsan gum, succinoglucan and dextran; water-soluble polysaccharides derived from plants and derivatives thereof including tragacanth gum, guar gum, tara gum, locust bean gum, ghatti gum, arabinogalactan gum, gum arabic, quince seed gum, pectin, starch, psyllium seed gum, pectin, carrageenan, alginic acid, agar and the like; water-soluble polysaccharides derived from animals and derivatives thereof including gelatin, casein and albumin. Moreover, N-vinylacetamide type resins such as N-vinylacetamide resin and crosslinked N-vinylacetamide resin can be used as the thickening resin.

In the present invention, the microbial polysaccharides and derivatives thereof can specifically and preferably be used among the said water-soluble resins. Such water-soluble resins can be used either alone or in combinations of two or more of them.

The water-soluble resin is preferably contained in 0.01 - 40% by weight relative to the total amount of the ink. If the content of the water-soluble resin is less than 0.01% by weight relative to the total amount of the ink, effect on preventing precipitation of the scaly glittering particles becomes unsatisfactory. When the water-soluble resin exceeds 40% by weight relative to the total amount of the ink, the viscosity of the ink becomes so high that the fluidity becomes poor. The optimum amount of the water-soluble resin to be compounded, which varies depending on its type, ranges 0.05 - 20% by weight.

### (Synthetic resin emulsion)

As previously mentioned, the present inventors have found that in order to obtain written marks of metallic luster color such as gold and silver and the like, the use of scaly glittering particles having a median diameter of at least 10 µm, a ratio of smoothness on the particle surface to a median diameter of not greater than 0.011, and a surface coating ratio of the said colorant in written marks of not greater than 80% together with the use of a colorant is necessary. The scaly glittering particles can provide, to written marks or coated films, glittering feeling and spatial effect higher than those with the conventional aluminum powder pigments and pearlescent pigments as well as providing the clear color development of the colorant.

However, they have also found that although an aqueous glittering ink containing a water-soluble thickening resin can increase the fixability of the glittering particles by this water-soluble thickening resin, it is difficult to fix firmly the glittering particles and the like to written marks or coated films since the size of the scaly glittering particles is large having the median diameter of not less than 10 µm, preferably not less than 25 µm, and , more preferably not less than 30 µm. Accordingly, in the case of the aqueous ink containing glittering particles, the glittering particles are easily peeled by friction after writing or coating and it is difficult to maintain high glittering feeling and spatial effect to written marks or coated films. Therefore, the durability of written marks or coated films having glittering feeling and spatial effect becomes poor.

From the above-mentioned situation, an important problem is to provide aqueous glittering inks which can improve the fixability of glittering particles to written marks or coated films and maintain a higher glittering feeling and spatial effect for the written marks or coated films without deteriorating ink characteristics or writing characteristics and without inhibiting the effects on the high glittering feeling and spatial effect derived from compounding the glittering particles.

As a result of intensive studies for solving this problem, the aqueous glittering inks of the invention may further contain a binder component which fixes the glittering particles to written marks or coated films.

On the other hand, another possible option for fixing such glittering particles to written marks or coated films is to use a water-soluble synthetic resin as a binder component. However, in the case of some water-soluble synthetic resins, if the contents thereof are set to be high in order to firmly fix the glittering particles with a large particle diameter as in the present invention, the solubility of the thickening resin and dispersibility of the colorant are badly influenced. Moreover, there may be cases where viscoelasticity of the ink are greatly reduced, which leads to reduction in writing characteristics. Moreover, even if fixability to written marks or coated films is shown, aqueous inks should not be the ones wherein high glittering feeling and spatial effect of the glittering particles are contained but are poor in written marks or coated films.

The present inventors have made further intensive studies. As a result, they have found that the use of a synthetic resin emulsion as a binder component for fixing the glittering particles to written marks or coated films permits improvement in fixability of the glittering particles to written marks or coated films without influencing the solubility of water-soluble thickening resins, dispersibility of colorants, viscoelasticity of ink, and coloring of ink and without inhibiting effects of high glittering feeling and spatial effect by compounding the glittering particles, and they have provided a further aspect of the present invention.

Accordingly, the aqueous ink of the present invention which contains a glittering particles with a large particle size is capable of improving the fixability of the glass flake pigment to written marks or coated films, forming written marks or coated films of durability, and maintaining a high glittering feeling and spatial effect for the written marks or coated films when it is put on a substrate such as paper, metal, plastics and textile fabrics by writing or coating. The reason for this is that the film formability of the synthetic resin emulsion is suitable for glittering particles having a large-sized particle shape and the glittering particles can be fixed firmly to written marks or coated films without inhibiting the effects of high glittering feeling and spatial effect by compounding the glittering particles

Moreover, since the binder component used in this aspect of the present invention is not a water-soluble synthetic resin but a synthetic resin emulsion, it does not influence properties including solubility of the water-soluble thickening resin to be compounded together, dispersibility of the colorant and viscoelasticity of the ink very much. The ink of the present invention therefore can improve the fixability of the glittering particles without influencing the viscoelasticity of the ink, writing characteristics and color of written marks or coated films.

From such facts, the aqueous glittering ink of the present invention containing the glittering particles can maintain, in written marks or coated films, a glittering feeling and spatial effect higher than those achieved by the conventional aqueous inks using glittering pigments such as aluminum powder pigments and pearlescent pigments without deteriorating ink characteristics, writing performance or the like or without inhibiting the high surface smoothness inherent to glass.

The synthetic resin emulsion of the present invention is not specifically limited and any water-dispersive synthetic resin emulsion is available. Considering the ink characteristics and writing performance however, it is important to use the ones which do not influence solubility of water-soluble thickening resin, viscosity of the ink, dispersibility of the colorant and coloring of the ink. Moreover, it is important not to inhibit the effect on the high glittering feeling and spatial effect caused by the composition of the glittering particles including glass flake particles and the like.

The minimum film forming temperature of the synthetic resin emulsion is preferably not higher than 20°C. If the minimum film forming temperature of the synthetic resin emulsion is not higher than 20°C, particularly not higher than 0°C, a film can be formed not only at room temperature (about 25°C) but in a cold district and fixability of written marks or coated films to substrates can be improved.

Synthetic resin emulsions having an anionic property or a nonionic property preferably can be used. Such synthetic resin emulsions having the anionic property or the nonionic property can be prepared, for example, by producing synthetic resins from anionic or nonionic monomers or using anionic or nonionic emulsifiers. If the synthetic resin emulsion has the anionic property or the nonionic property, the stability of the ink can be improved.

Preferred synthetic resin emulsions do not influence the dispersibility of colorants or solubility of water-soluble thickening resin when the pH of inks is 6 or more.

From such a viewpoint, for example, acrylic-based synthetic resin emulsions, styrene-acryl based synthetic resin emulsions and vinyl acetate based synthetic resin emulsions can be used as a synthetic resin emulsion. Preferred examples of the acrylic-based synthetic resins include acrylate copolymer synthetic resin emulsions. Preferred examples of the styrene-acryl based synthetic resin emulsions include styrene-acrylate copolymer synthetic resin emulsions. As the vinyl acetate based synthetic resin emulsions, vinyl acetate synthetic resin emulsions and vinyl acetate-acrylate copolymer synthetic resin emulsions, for example, are preferably used. As the synthetic resin emulsion, one species of these synthetic resins can be used and also two or more species of these synthetic resins can be used in combination.

For example, the acrylic-based synthetic resin emulsion can be exemplified by the trade name."Nikasol FX336" (manufactured by Nippon Carbide Industries Co., Inc.; anionic; pH 7.5; minimum film forming temperature = 0°C), the trade name "Mowinyl DM772" (manufactured by Clariant Polymers Co., Ltd ; anionic; pH 8.5; minimum film forming temperature = 12 - 14°C) and the trade name "Mowinyl 700" (manufactured by Clariant Polymers Co., Ltd ; anionic; pH 8.0; minimum film forming temperature = 5°C). The vinyl acetate based synthetic resin emulsion can be exemplified by the trade name "Nikasol TG134A" (manufactured by Nippon Carbide Industries Co., Inc.; pH 7.5; minimum film forming temperature = 0°C) and the trade name "Mowinyl 507" (manufactured by Clariant Polymers Co., Ltd ; nonionic; pH 6.5; minimum film forming temperature = 0°C) .

Although the content of the synthetic resin emulsion is not particularly specified, a preferable range is 0.01 - 40% by weight in solids relative to the total amount of the ink, for example. The content of the synthetic resin emulsion of less than 0.01% by weight in solids relative to the total amount of the ink results in reduction in fixability of the glittering particles to written marks or coated films. If the content of the synthetic resin emulsion exceeds 40% by weight in solids relative to the total amount of the ink, the solids are so high that writing characteristics are deteriorated because of, for example, film formation at the pen tip. In addition, written marks or coated films are liable to whiten. In order to improve the fixability of the glittering particles to written marks or coated films further, the most desirable content of the synthetic resin emulsion is at least 0.3% by weight in solids relative to the total amount of the ink. Moreover, in order to improve writing characteristics further, the most desirable content of the synthetic resin emulsion is 20% by weight in solids relative to the total amount of the ink. That is, the optimum content of the synthetic resin emulsion is 0.3 - 20% by weight .

In addition, also in the case of the ink containing the synthetic resin emulsion as a binder component together with the glittering particles, it is important that the resins can adjust viscosity of the ink and facilitate dispersion of the glass flake pigment and prevent its precipitation. Water-soluble thickening resin with a function to form a film of written marks or coated films can be used. For example, microbial polysaccharides and derivatives thereof can be used, including pullulan, xanthan gum, welan gum, rhamsan gum, succinoglucan and dextran. Water-soluble polysaccharides derived from plants and derivatives thereof also can be used, including tragacanth gum, guar gum, tara gum, locust bean gum, ghatti gum, arabinogalactan gum, gum arabic, quince seed gum, pectin, starch, psyllium seed gum, pectin, carrageenan, alginic acid and agar. Water-soluble polysaccharides derived from animals and derivatives thereof can also be used, including gelatin, casein and albumin.

As the water-soluble thickening resin, salts (sodium salts, ammonium salts and the like) of water-soluble resins (acryl based water-soluble resins, styrene-acryl based resins, styrene-maleic acid based resins and the like), water-dispersion type resins and the like can also be used.

In the case of inks which contain a synthetic resin emulsion as a binder component together with the glittering particles, the microbial polysaccharides and derivatives thereof can be used preferably among the said water-soluble thickening resins. Such water-soluble thickening resins can be used either alone or in combinations of two or more of them.

In the case of inks which contain a synthetic resin emulsion as a binder component together with the glittering particles, the water-soluble thickening resin is preferably contained in 0.01 - 40% by weight relative to the total amount of the ink. In the case where the water-soluble thickening resin is less than 0.01% by weight relative to the total amount of the ink, the glittering particles are liable to precipitate. If the water-soluble thickening resin exceeds 40% by weight relative to the total amount of the ink in the case of the ink containing the synthetic resin emulsion, the viscosity of the ink becomes so high that the fluidity becomes poor and writing characteristics are deteriorated. The optimum amount of the water-soluble thickening resin to be compounded somewhat varies depending upon the type of the water-soluble thickening resin, but is 0.05 - 20% by weight.

Also in the case of the ink containing a synthetic resin emulsion as a binder component together with the glittering particles, water-soluble organic solvents which are capable of preventing both drying at the pen tip and freezing of the ink are preferably used, which can be exemplified by glycols such as ethylene glycol, diethylene glycol, triethylene glycol, propylene glycol and polyethylene glycol, polyhydric alcohols such as glycerin, and glycol ethers such as ethylene glycol monomethyl ether, diethylene glycol monomethyl ether, dipropylene glycol monomethyl ether and dipropylene glycol monopropyl ether, and the like. These organic solvents can be used either alone or in combinations of two or more of them.

As for water-soluble organic solvents, aliphatic monohydric alcohols with 1 to 4 carbon atoms, aliphatic polyhydric alcohols such as glycerin, glycols such as propylene glycol and glycol ethers such as propylene glycol monomethyl ether and the like are preferably used.

Also in the case of the ink containing the synthetic resin emulsion as a binder component together with the glittering particles, the content of the water-soluble organic solvent is 1 - 40% by weight relative to the total amount of the ink. In the case where the content of the water-soluble organic resin is less than 1% by weight relative to the total ink, a pen tip is liable to dry and the ink becomes liable to freeze. If the content of the water-soluble organic solvent exceeds 40% by weight relative to the total amount of the ink, the solubility of the water-soluble thickening resin is influenced and written marks and coated films become hard to dry. In the case of this ink, the optimum amount of the water-soluble organic solvent to be compounded varies depending upon the type of the water-soluble organic solvent, but is 5 - 30% by weight.

In the case of the ink containing the synthetic resin emulsion as a binder component together with the glittering particles, the use of colorants can adjust the color of the ink to various colors. It is important to use colorants which do not react with the glittering particles and do not influence the coloring of the glittering particles. Moreover, those with excellent solubility and dispersibility are preferable as a colorants.

For example, water-soluble dyes such as acid dyes, direct dyes and basic dyes (triphenylmethane-type, xanthene-type, anthraquinone-type, metal complex-type, copper phthalocyanine-type and the like), organic pigments or inorganic solvents such as phthalocyanine, quinacridone, carbon black and titanium oxide, or fluorescent pigments, resin emulsions, colored resin emulsion and the like can be used. The colorant also can be compounded in the form of a pigment dispersion. The colorants can be used either alone or in combinations of two or more of them.

With regard to an ink containing the synthetic resin emulsion together with the glittering particles, aqueous inks containing colorants can provide high brilliance depending upon the hue or the like of the colorants contained.

In the case of the ink containing the synthetic resin emulsion as a binder component together with the glittering particles, the content of the colorant is preferably 0.01 - 30% by weight relative to the total amount of the ink. When the colorant is less than 0.01% by weight relative to the total amount of the ink, the coloring by the colorant becomes difficult to be visually recognized. When the colorant exceeds 30% by weight relative to the total amount of the ink, the viscosity of the ink becomes so high that the fluidity becomes poor and glittering feeling is deteriorated. The optimum amount of the colorant to be compounded, which varies depending on its type, is 0.05 - 20% by weight.

### (Viscosity range)

The viscosity range is not specifically limited but such an aqueous ink is preferable as mentioned above, having the pseudo-plasticity fluidity (thixotropic property) whose thixotropy index (T.I. value ) is not less than 1.3 represented by the ratio of V_{0.5} to V_{1.0} (V_{0.5} / V_{1.0}), wherein V_{0.5} is the viscosity with the rotation speed of 0.5 rpm and V_{1.0} is the viscosity with the rotation speed of 1.0 rpm when the ink is measured by an ELD-type viscometer (3°R14 cone, at the temperature of 20°C). Further, the aqueous ink having the pseudo-plasticity fluidity (thixotropic property) with V_{0.5} of 1000∼15000mPa.s, the viscosity when measured by an ELD-type viscometer with a rotation speed of 0.5rpm(3°R14 cone at the temperature of 20°C) is preferable.

In addition, such an aqueous ink is preferable as having the pseudo-plasticity fluidity (thixotropic property) whose thixotropy index (T.I. value ) is not less than 1.3 represented by the ratio of V_{0.5} to V_{1.0} (V_{0.5} / V_{1.0}), wherein V_{0.5} is the viscosity with the rotation speed of 0.5 rpm and V_{1.0} is the viscosity with the rotation speed of 1.0 rpm when the ink is measured by an ELD-type viscometer (3°R14 cone, at the temperature of 20°C) and having the pseudo-plasticity fluidity (thixotropic property) with V_{0.5} of 1000∼15000mPa.s, the viscosity when measured by an ELD-type viscometer with a rotation speed of 0.5rpm(3°R14 cone at the temperature of 20°C) .

Here, when V_{0.5}, the viscosity with the rotation speed of 0.5 rpm measured by an ELD-typed viscometer (3°R14 cone, at the temperature of 20°C) is less than 1000mPa.s, since the viscosity is low in the case of the ink containing the said glittering particles relating to the present invention, the dispersal stability lowers, thereby causing precipitation over time and it is not preferable. On the other hand, when V_{0.5} exceeds 15000mPa.s, the viscosity becomes so high that the writing characteristics lowers particularly when used as the ink for ball-point pens.

### (Other additives)

Moreover, to the ink of the present invention can be compounded conventional water such as ion-exchange water. In addition, as needed, lubricants such as polyoxyethylene alkali metal salts, dicarboxylic amides, phosphates and N-oleyl sarcosine salts and the like, rust-inhibitors such as benzotriazole and tolyltriazole dicyclohexyl ammonium nitrate and the like, antiseptic mildew-proofing agents such as benzoisothiazoline-type, pentachlorophenol-type and cresol and the like, and various surfactants can be added.

### (Applications)

The aqueous glittering ink can be used in the fields of writing tools, printing, coating and cosmetics and the like. It is useful in a variety of applications as an aqueous glittering ink for writing tools (an aqueous glittering ink for ball-point pens and the like), an aqueous glittering ink for printing, an aqueous glittering ink for applicators (an aqueous glittering ink for coating and the like) and the like. It is particularly the most desirable as an aqueous glittering ink for ball-point pens.

The example of ball-point pens includes the ball-point pens with an aqueous ink containing the scaly glittering particles having a smooth metal surface filled in the ink tank. As for the said scaly glittering particles, in particular, aluminum particle surface having a smooth particle surface are preferable. In addition, preferable ball-point pens are the ones with an aqueous ink filled in the ink tank containing scaly glittering particles whose median diameter is at least 10µm, preferably not less than 25µm or 30µm, or over 30µm to 50µm, that is, 30∼50µm or depending on the case, over 30µm to 100µm, that is, 30∼100µm.

### (Method of preparation)

The aqueous glittering ink of the present invention is not specifically limited but can be obtained, for example, by mixing and stirring the ingredients other than water-soluble resin to disperse them, and thereafter charging a water-soluble resin and filtering the resulting mixture, and subsequently degassing. In particular, the ink containing the synthetic resin emulsion as a binder component together with the glittering particles is preferably prepared by the following process, although the preparation is not specifically limited. First, water, a water-soluble organic solvent, and, as needed, other additives are mixed and stirred; to the mixture is charged the glittering particles, and the resulting mixture is stirred; and thereafter a water-soluble thickening resin is added and stirred. Next, the pH of the mixed liquid is adjusted as needed, and a colorant is added and stirred, as needed. Subsequently, the synthetic resin emulsion is added and mixed.

As for these preparations, heretofore known dispersing techniques, degassing techniques, filtering techniques and the like can be adopted.

### (Method of forming the written marks and the written marks)

The method of forming the written marks of the aqueous ink in the present invention is not specifically limited, but such a writing method of the aqueous glittering ink is preferable as having scaly glittering particles with a median diameter of at least 10µm, a ratio of smoothness on the particle surface to the said median diameter of not greater than 0.011, and a surface coating ratio of the said colorant on the particle surface of not greater than 80% in a state of dried written marks, wherein the said scaly glittering particles are interspersed with a rate of not greater than 80% with respect to the total written surface and the said colorant's particles are interspersed among the said glittering particles.

Figure 1 is the schematic sectional view showing the typical example of written marks when writing with the ink by the said writing method. As shown in Figure 1, in the embodiment of the present invention, the glittering particles 101 having the said property value are interspersed with the rate of not greater than 80% with respect to the written surface10 on the surface of a sheet of paper 2 (a coated surface) and are capable of forming written marks 1 in which colorant's particles 103 are interspersed among glittering particles 101 and glittering particles 102. In written marks 1, when seen in a microscopic manner, the glittering particles 101 and 102 having the said property value are set on a sheet of paper 2 (coated surface) maintaining the smooth surface to the concavo-convex surface constituting the said coated surface, further among the glittering particles 101 having this smooth surface and glittering particles 102 having this smooth surface , the colorant's particles 103 are interspersed as a particle group partially absorbed in a tissue of a sheet of paper 2. In the embodiment of the present invention, written marks are shown by the two types of glittering particles 101 and 102. As a matter of course, however, it is important to make such written marks wherein several glittering particles exist and the colorants are interspersed among glittering particles having the said property value and the particle group of the colorants are arranged. By adopting such writing method or forming method of the written marks, the glittering particles have several smooth areas with a variety of angles interspersed on the surface of written marks due to the concavo-convex surface constituting the surface of a sheet of paper 2 (a coated surface). Moreover, since these glittering particles are the scaly glittering particles wherein the surface coating ratio of the said colorant on the particle surface is not greater than 80% in a state of dried written marks, there is little or no incidence of the light to the colorant's particles covering the surface of glittering particles 101 and 102. Therefore, without disturbing the reflected light to the respective smooth surfaces of the glittering particles, the incident light 31 and reflected light 32 of light 3 can be obtained depending on the smooth surface of the glittering particles. Moreover, as shown in the Figure 1, since the incident light 31 and reflected light 32 of light 3 occur at a different angle to the respective smooth surfaces 111 and 112 of the glittering particles 101 and 102, by subtly changing the angle at which the written marks are seen at the eye's position the starry glitter is to be realized. Further, since the embodiment of the present invention refers to the written marks wherein the glittering particles having the said property value are interspersed with the rate of not greater than 80% to the total written surface area on the surface of a sheet of paper (a coated surface) and the colorant's particles are interspersed among the glittering particles, the glittering feeling of the glittering particles and the color development of the colorant are maintained with good balance thereby providing the starry glitter and color development with each other synergistically. Here, when the glittering particles having the said property value are interspersed with the rate of exceeding 80% to the total written surface on a sheet of paper (a coated surface), even if there are colorants among the several glittering particles, the color development of the said colorants is suppressed since the glittering feeling of the glittering particles exceeds the color development of the colorants on the written surface. Beside, the glittering feeling of the glittering particles appearing on the written surface is not determined visually, solely by the area which the glittering particles occupy on the written surface, but rather, if these glittering particles occupy most of the total written surface, together with the lowering of the color development of the colorant's particles, the coloring surface of the glittering particles is to be formed and the glittering feeling lowers on the contrary. In other words, since the glittering feeling of the glittering particles is the visual feeling appearing synergistically in relation to the interspersion of the colorants existing among the glittering particles, it is also preferable to intersperse this glittering feeling with the rate of not greater than 80% to the total written surface in relation to the color development of the colorants. Here, in the present invention, the " interspersing rate" refers to the value (%) obtained by measuring the area of the glittering particles occupying the total written surface by using the microscope manufactured by ELIONIX INC. under the trade name of "ERA-8000" as already mentioned, thereby calculating the ratio. Here, it is more preferable for the scaly glittering particles of the present invention to be the particles wherein the surface coating ratio of the colorant on the particle surface is not greater than 40% in the state of dried written marks. In addition, it is the most suitable to intersperse these scaly glittering particles with the rate within the range of 20∼45% to the total written surface.

By the way, the inventors have found that in the case of an aqueous ink which contains binder components fixing the said scaly glittering particles to written marks or coated films, while the resin component constituting the binder component fixes the scaly glittering particles to a written surface (a coated surface), it forms the resin film, directly covering the surface of the said glittering particles and that the resin film further forms the concavo-convex, which impairs the glittering feeling of the glittering particles. The preferred embodiment of the present invention has found that when the concavo-convex rate which the resin film has is not greater than 0.15µm, the written marks can have a strong glittering feeling. In the present invention, the concavo-convex rate refers to the average value of R ₘₐₓ (µm), the maximum value of roughness measured on each surface of the several glittering particles which exist per unit area of the written marks or coated films in a state of dryness by using the microscope manufactured by ELIONIX INC. under the trade name of "ERA-8000".

The glittering feeling of the scaly glittering particles is realized well with the starry glitter when the rate of the smoothness on the coated film (the smoothness on the written surface) is not less than 9µm. When the rate of the smoothness on the coated film (the smoothness on the written surface) is less than 9µm, as above-mentioned, the gradient of the smooth surface of the glittering particles arranged on the written surface becomes small thereby making it difficult to receive the satisfactory starry glitter by changing the position to see these particles. Here, the "smoothness on the coated films" refers to the average value of R ₘₐₓ (µm), the maximum value of roughness measured on each surface of the several glittering particles which exist per unit area of the written marks or coated films in a state of dryness by using the microscope manufactured by ELIONIX INC. under the trade name of "ERA-8000".

### EXAMPLES

Aqueous glittering inks of the Examples and Comparative Examples of Tables 11 to 13 were provided by mixing and stirring ingredients including water, a water-soluble organic solvent, glittering particles and a colorant or a pigment base and the like in the compositions and amounts (parts by weight) given in Tables 1 to 3 to disperse them, thereafter charging a water-soluble resin and filtering the resulting mixture, and subsequently degassing. In every preparation, heretofore known dispersing, degassing, filtering techniques and the like were used.

Aqueous glittering inks of other Examples and Comparative Examples were prepared by mixing and stirring ingredients including water a water-soluble organic solvent, and, as required, other additives in the compositions and amounts (part by weight) given in Tables 4 to 6 to stir them, charge glittering particles and stir, thereafter charging a water-soluble thickening resin and stirring the resulting mixture. Next, after adjusting the pH, as required, the colorants as required was added and stirred. Subsequently, synthetic resin emulsion was added and mixed. For information, in this preparation, heretofore known dispersing, degassing, filtering techniques and the like were used. By the pH adjustment in the said method of preparation, the pH was adjusted to 8.5 by caustic soda.

In the tables below, "Comp. Ex." and "Comp." where used mean "Comparative Examples" and "Ex." Means Example.

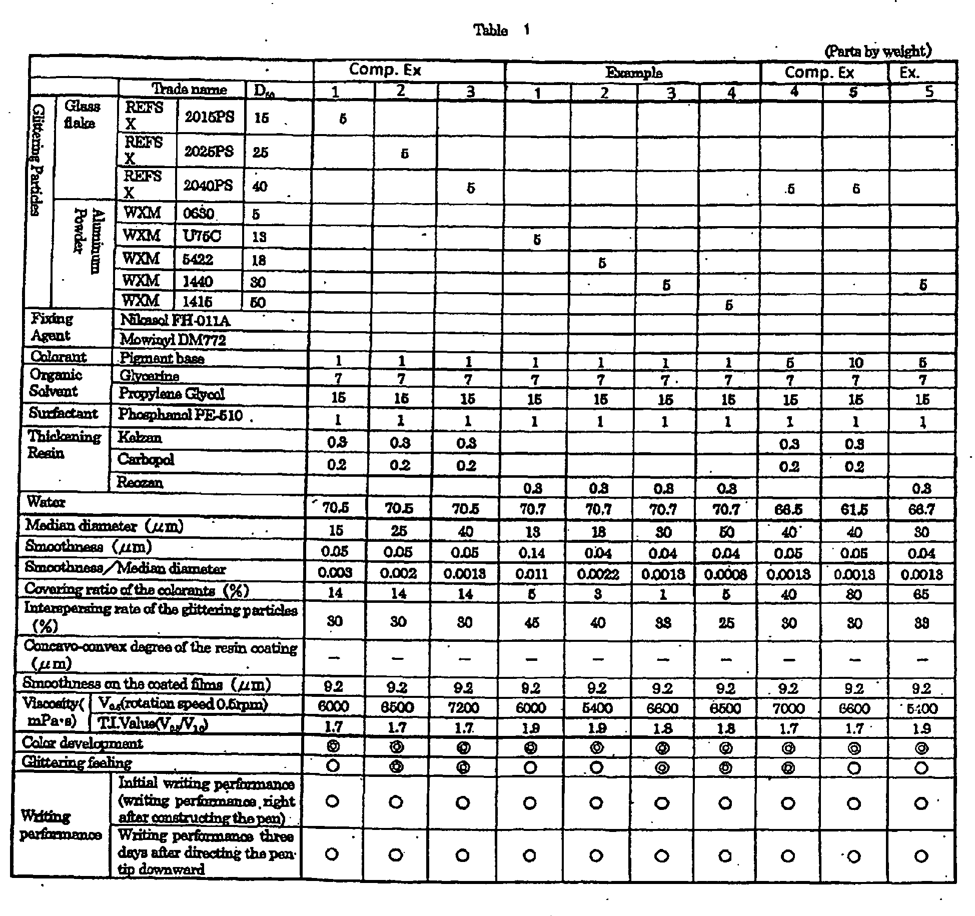

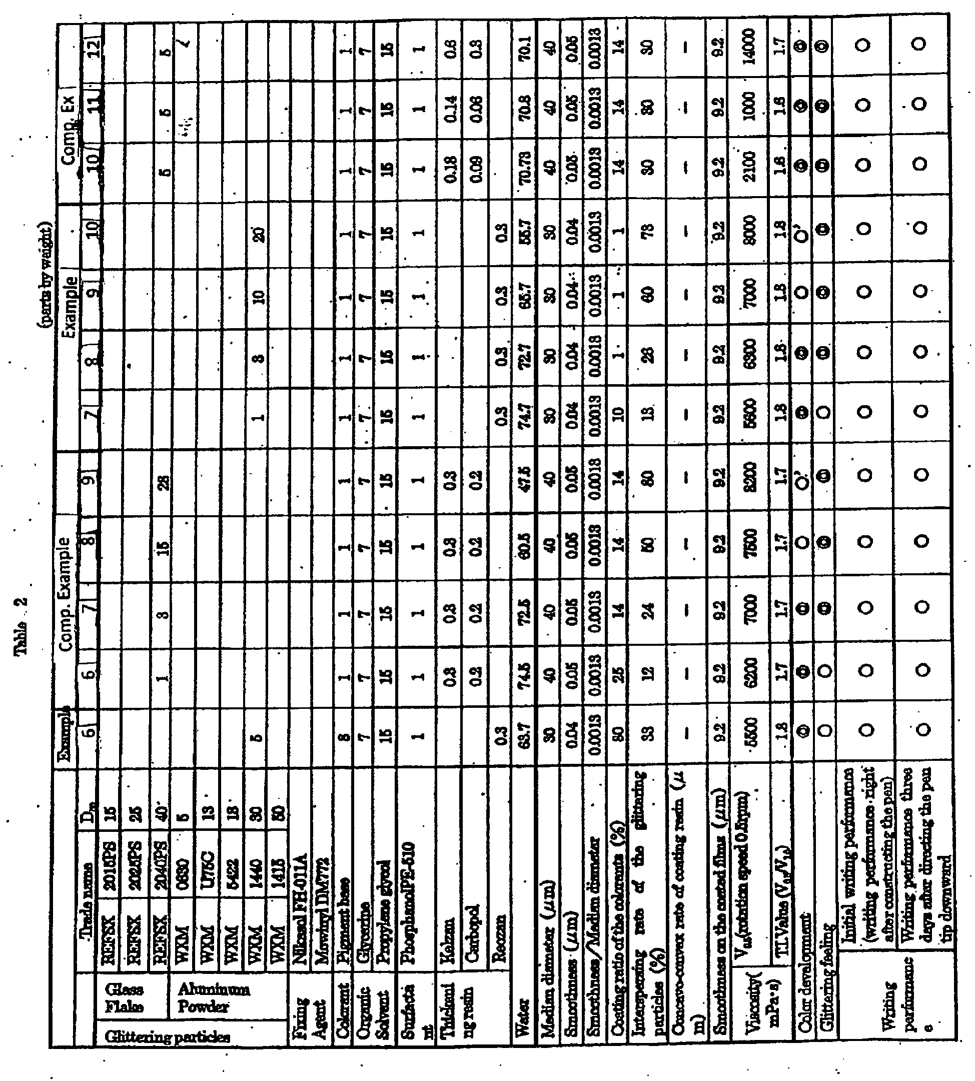

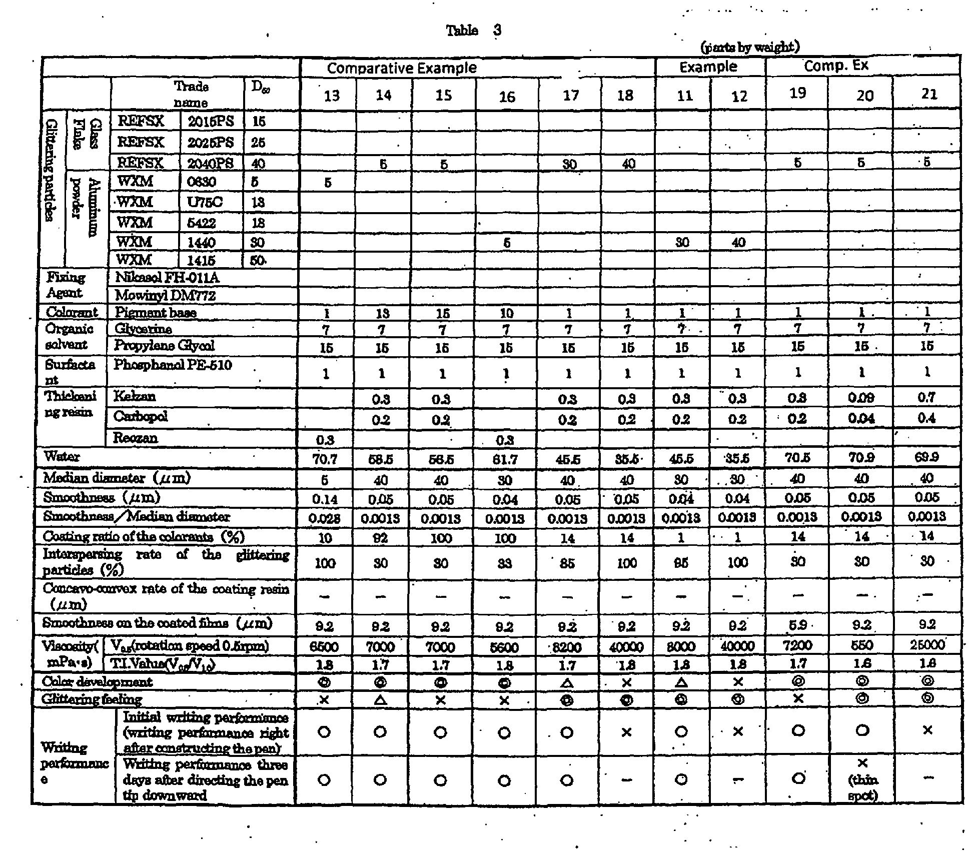

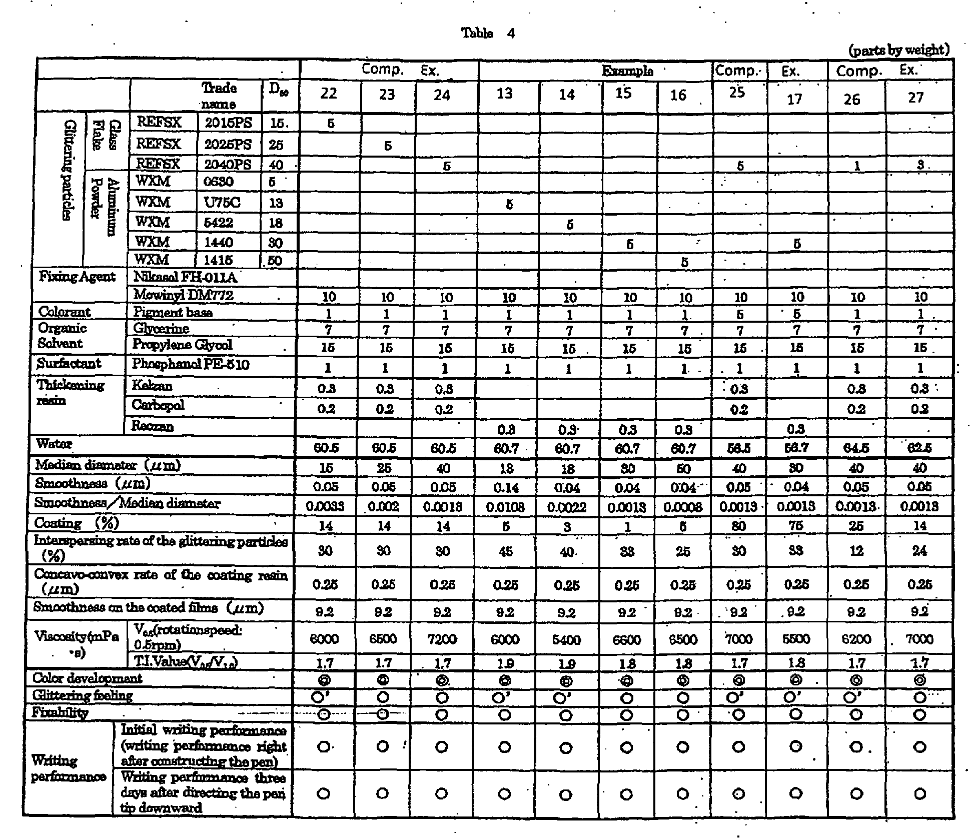

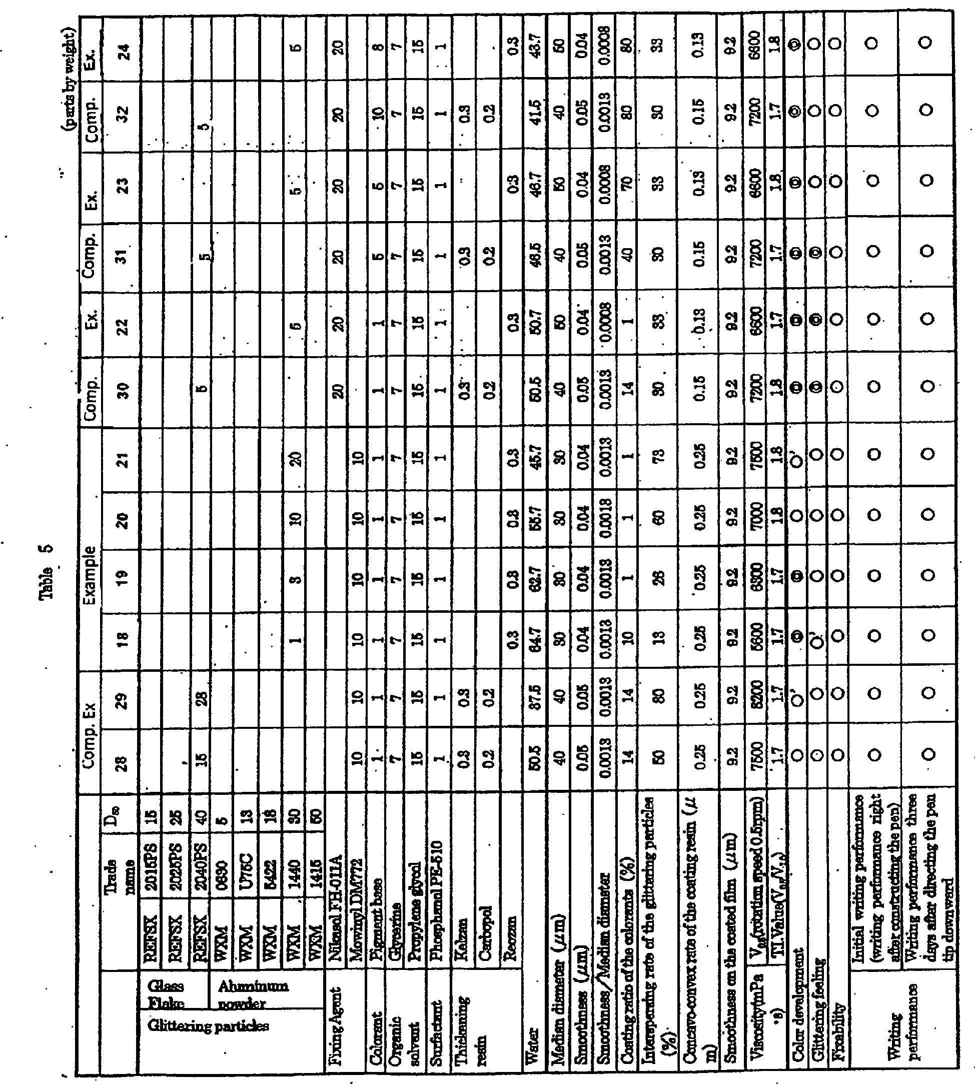

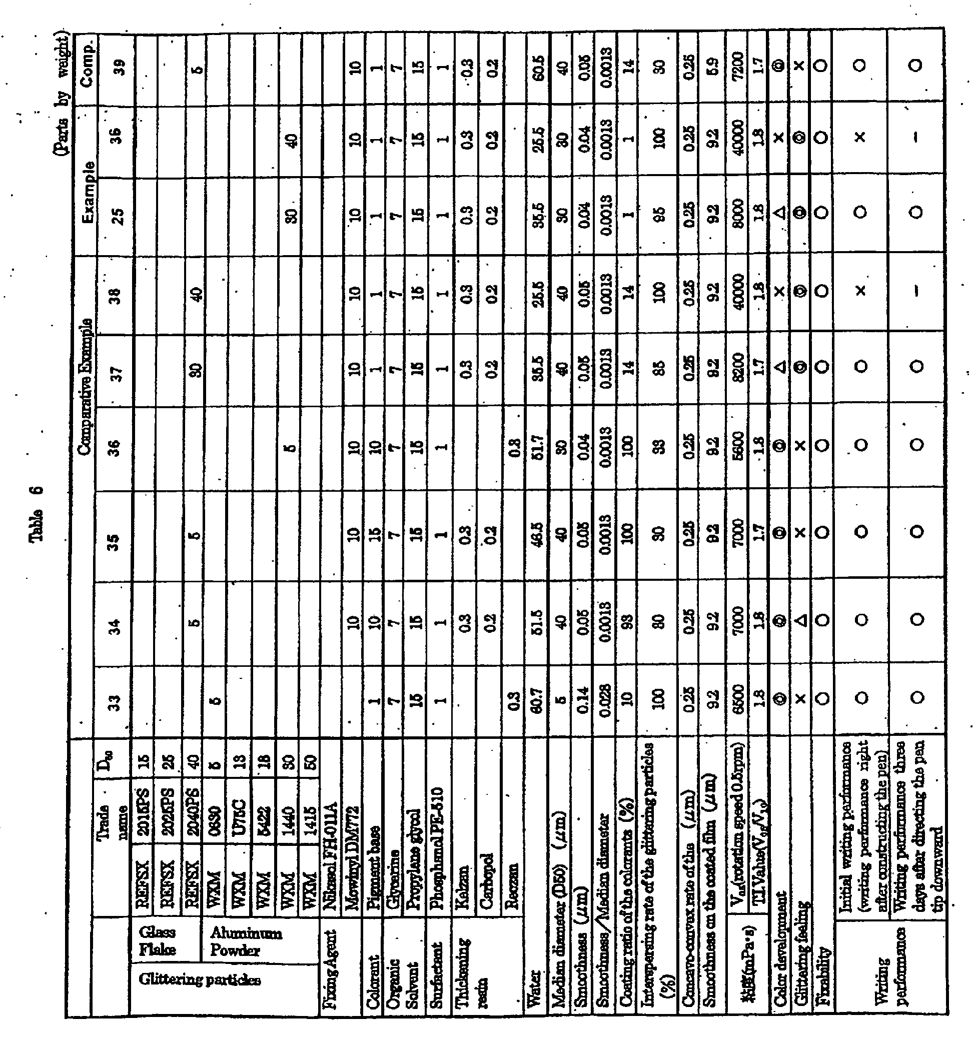

In Tables 1 - 6 , each raw material composition is as follows:

### (Glittering particles)

① Glass Flake Particles: trade name "Metashine REFSX-2015PS", manufactured by Toyo Aluminium Co., Ltd., median diameter = about 15 µm
② Glass Flake Particles: trade name "Metashine REFSX-2025PS ", manufactured by Toyo Aluminium Co., Ltd., median diameter = about 25 µm
③ Glass Flake Particles: trade name "Metashine REFSX-2040PS", manufactured by Toyo Aluminium Co., Ltd., median diameter = about 40 µm
④ Aluminum powder: trade name "WXM0630", manufactured by Toyo Aluminium Co., Ltd., median diameter = about 5 µm
⑤ Aluminum powder: trade name "WXM U75C", manufactured by Toyo Aluminium Co., Ltd., average particle size = about 13 µm
⑥ Aluminum powder: trade name " WXM 5422", manufactured by Toyo Aluminium Co., Ltd., average particle size = about 18 µm
⑦ Aluminum powder: trade name " WXM 1440", manufactured by Toyo Aluminium Co., Ltd., average particle size = about 30 µm
⑧ Aluminum powder: trade name "WXM 1415", manufactured by Toyo Aluminium Co., Ltd., average particle size = about 50 µm

### (Water-soluble resin)

① Xanthan gum: trade name "Kelzan", manufactured by Kelco a unit of Monsanto Company.
④ Polyacrylic acid: trade name "Carbopol 940", manufactured by BF Goodrich Co., Ltd.
⑤ Succinoglycan: trade name "Reozan", manufactured by Sansho Co., Ltd

### (Water-soluble organic solvent)

① Glycerin
② Propylene glycol

### (Binder component / Fixing agent)

① Acryl acrylate, acryl methacrylate ether copolymer resin emulsion: trade name "Nikasol FH-011A" , manufactured by Nihon Carbide Kogyo Co., Ltd. ; anionic property; pH 7.0; minimum film forming temperature 0°C; viscosity 150mPa · s ( a BH-typed viscometer at the temperature of 25°C) ; median diameter = about 0.05 µm
② Acrylate ester copolymer resin emulsion: trade name " Mowinyl DM772" manufactured by Clariant Polymer Co., Ltd. ; anionic property, pH 8.5 ; minimum film forming temperature 12∼14°C; viscosity 1200mPa · s ( a BH-typed viscometer at the temperature of 25°C) ; median diameter = about 0.06 µm

Here, in the Tables, binder component/fixing agent is represented by the amount in which solids are contained.

### (Colorant)

### (Pigment base)

Pigment dispersion was prepared (average particle size = 0.08 µm; solid content = 10% by weight), by adding and dissolving sodium hydroxide to a mixture obtained by mixing phthalocyanine blue (5 parts by weight) and a styrene-acryl copolymer (1 part by weight: trade name "JOHNCRYL J683", Johnson Polymer Co., Ltd., weight average molecular weight = 8000) thereafter conducting dispersion with a ball mill.

### (Lubricant / Surfactant)

Mono (di) polyoxyethylene alkyl ether phospholate: manufactured by Toho Kagaku Co., Ltd. under the trade name of "Phosphanol PE-510"

### (Preparation of test samples)

Next, a ball point pen was prepared for each sample test wherein each of the ink of Examples and Comparative Examples given in Table 1 to 6 was packed into an ink container made of a polypropylene tube equipped with a ball-point pen tip made of stainless steel (ball material: silicon carbide), and ball-point pens of test samples having the ink containers therein were prepared. The diameter of a ball is 1.0mm.

### (Evaluation Test)

The glittering feeling and color development of each ink for the Examples and Comparative Examples given in Tables 1 to 6 were evaluated in a state of dried written marks by writing on commercially available loose-leaf sheets with these ball-point pens. The fixability of the written marks or coated films of the ink was also evaluated in Tables 4 to 6. In addition, the viscosity and thixotropy index (T.I. value) in each of the Examples and Comparative Examples were measured.

Here, in Tables 1 to 6, each property value is evaluated in a state of dried written marks. The said "median diameters" refers to D₅₀ value (µm) measured by the method of laser diffraction analysis using an equipment manufactured by ELIONIX INC. under the trade name of "ERA-8000". In addition, the said smoothness is the average value of R ₘₐₓ (µm), the maximum value of roughness measured on each surface of the several glittering particles which exist per unit area of the written marks or coated films in a state of dryness by using the microscope manufactured by ELIONIX INC. under the trade name of "ERA-8000".

Here the "surface ratio of the colorant" refers to the coating ratio of the colorant including the coloring pigment which covers the surface of a particle and is represented by the coating area of the colorant to the total surface area of the surface of a particle. In the present invention, the coating ratio of the colorant is so obtained as using the electron microscope manufactured by ELIONIX INC. under the trade name of "ERA-8000" as already mentioned, and measuring the average value of the surface area of the said particles and the coating area of the colorant. "Interspersing rate" of the glittering particles refers to the value(%) obtained by measuring the area of the glittering particles occupying the total written surface by using the microscope manufactured by ELIONIX INC. under the trade name of "ERA-8000" as already mentioned, thereby calculating the ratio. The concavo-convex rate of the resin coated films refers to the average value of R ₘₐₓ (µm), the maximum value of roughness measured on each surface of the several glittering particles which exist per unit area of the written marks or coated films in a state of dryness by using the microscope manufactured by ELIONIX INC. under the trade name "ERA-8000". Here, the "smoothness on the coated films" refers to the average value of R ₘₐₓ (µm), the maximum value of roughness measured on each surface of the several glittering particles which exist per unit area of the written marks or coated films in a state of dryness by using the microscope manufactured by ELIONIX INC. under the trade name of "ERA-8000".

Here, the Example 25 in the Table 6, the evaluation is conducted by writing on a commercially available art paper unlike the case of the said Examples and Comparative Examples using a commercially available loose-leaf sheet.

As for the ink viscosity, with the use of an ELD-type viscometer obtained from Toki Sangyo Co.,Ltd. the thixotropy index (T.I. value ) is measured represented by the ratio of V_{0.5} to V_{1.0} (V_{0.5} / V_{1.0}), wherein V_{0.5} is the viscosity at a rotation speed of 0.5 rpm and V_{1.0} is the viscosity at a rotation speed of 1.0 rpm when the ink is measured by the said ELD-type viscometer (3° R14 cone, at the temperature of 20°C). The above tables also show the V_{0.5}, the viscosity when measured by an ELD-type viscometer at a rotation speed of 0.5rpm(3° R14 cone at the temperature of 20°C).

### (Evaluation of color development)

Evaluation of the color development was conducted by visual observation of writings. Rating criteria were, in a state of dried written marks, : ⊚ for ones having particularly strong color development, ○ for ones having strong color development, ○' for ones having color development, △ for ones having little color development, × for ones having no color development.

### (Evaluation of glittering feeling)

Evaluation of the glittering feeling was conducted by visual observation of writings. Rating criteria were, in a state of dried written marks,: ⊚ for ones having particularly strong glittering feeling, ○ for ones having strong glittering feeling, ○' four ones having glittering feeling, △ for ones having little glittering feeling × for ones having no glittering feeling.

### (Evaluation of fixability)

The fixability was evaluated according to the following criteria by writing on commercially available loose-leaf sheets with ball-point pens of test samples according to every Example and Comparative Example, drying the written marks, thereafter adhering commercially available adhesive cellophane tapes thereon, and then visually observing conditions after peeling the tapes.
○: Glittering particles remain on the written marks and the glittering feeling before peeling of the cellophane tape has not been lost.
×: Glittering particles are peeled from the written marks and the glittering feeling before peeling of the cellophane tape has been lost.

Tables 1 to _6 show the result of the glittering feeling and color development of the written marks or coated films of the ink according to every Example and Comparative Example. In addition, tables 4 to 6 show the result of the fixability of the said written marks or coated films.

### (Evaluation of writing performance)

Writhing performance refers to the one right after the construction of a ball-point pen in the said each test sample and the one three days after directing the pen-tip of the said ball-point pen downward. This writing performance was, as above-mentioned, evaluated based on the following criteria, that is; o for ones having good writing performance with smooth feeling when writing and X for ones having poor writing performance with little smoothness. Further, in the Tables, those with thin spots are shown as X(thin sports).

As shown in the Examples 1 to 4, Comparative Example 13, Examples 13 to 16 and Comparative Example 33 in the Tables 1 to 6, it is recognized for the glittering particles to have a median diameter of at least 10µm further at least 13 µm, preferably not less than 25 µm, and most preferably not less than 30 µm.

As shown in the Example 1, Comparative Example 13, Example 13 and Comparative Example 33 and the like in the Tables 1 to 6, it is recognised that the scaly glittering particles have a ratio of smoothness on the particle surface to a median diameter of not greater than 0.011 in respect of the glittering feeling.

In addition, as shown in each of the Examples and Comparative Examples, that is, in the Example 6, the Comparative Examples 14 and the like in the Tables 1 to 6, it is recognized that the particles have the surface coating ratio of the said colorant on the said particle surface of not greater than 80% preferably not greater than 40% in a state of dried written marks.

In addition, it is recognized that the ink having pseudo-plasticity fluidity (thixotropic property) with the said thixotropy index (T.I value) of not less than 1.3 represented by the ratio of V_{0.}5 to V_{1.0} (V_{0.5} / V_{1.0}), wherein V_{0.5} is the viscosity with the rotation speed of 0.5 rpm and V_{1.0} is the viscosity with the rotation speed of 1.0 rpm when the ink is measured by an ELD-type viscometer (3° R14 cone at the temperature of 20°C) and with V_{0.5} of 1000-15000mPa · s, the viscosity when measured by an ELD type viscometer with a rotation speed of 0.5 rpm (3° R14 cone at the temperature of 20°C) is desirable.

Moreover, as shown in the Comparative Examples 9,29, 8 and in the Comparative Examples 17, 35-38 in the Tables 1 to 6, it is recognized that the written mark which intersperses this scaly glittering particles to the total written surface with the range of not greater than 80%, preferably within the range of 20-45% is good in respect of color development and glittering feeling.

Further, as shown in each of the Examples and Comparative Examples in the Tables 1 to 6, it is recognized that the concavo-convex rate which the resin film covers the surface of the scaly glittering particles not greater than 0.15µm is excellent in glittering feeling. It was also recognized to be preferable to have the smoothness of the coated films which is not less than 9µm.

## Claims

1. An aqueous glittering ink comprising scaly glittering particles, a colorant, a water-soluble thickening resin, a water-soluble organic solvent, and water, wherein the said scaly glittering particles have a median diameter (that is, D₅₀ value (µm) measured by laser diffraction analysis using an equipment manufactured by Leeds & Northrup under the trade name of "Microtrac HRA 9320-X100") of at least 10µm and a metal surface, the scaly glittering particles are aluminum particles, and the ratio of smoothness of the particle surface (the said smoothness being the average value of R ₘₐₓ (µm), the maximum value of roughness measured on each surface of the several glittering particles which exist per unit area of the written marks or coated films in a state of dryness by using the electron microscope manufactured by ELIONIX INC. under the trade name of "ERA- 8000") to the median diameter is at most 0.011, the proportions of the colorant and the glittering particles being such that when a written mark is made by the ink the colorant covers at most 80% of the surface of the particles.

2. An aqueous glittering ink as set forth in claim 1, wherein the said glittering particles have a median diameter of at least 25µm.

3. An aqueous glittering ink as set forth in claim 1, wherein the said glittering particles have a median diameter of at least 30µm.

4. An aqueous glittering ink as set forth in any of claims 1 to 3, further comprising a binder component for fixing the said scaly glittering particles to a written mark or a coated film.

5. An aqueous glittering ink as set forth in claim 1, wherein a surface of the said glittering particles is a smooth metallic surface on which incident light reflects totally.

6. An aqueous glittering ink as set forth in any one of claims 1 to 5, wherein the ink has pseudo-plasticity fluidity (thixotropic property).

7. An aqueous glittering ink as set forth in claim 6, wherein the ink has a T.I. value, the thixotropy index, of not less than 1.3 represented by the ratio of V_{0.5} to V_{1.0} (V_{0.5}/V_{1.0}), wherein V_{0.5} is the viscosity at a rotation speed of 0.5 rpm and V_{1.0} is the viscosity at a rotation speed of 1.0 rpm when the ink is measured by an ELD-type viscometer (3° R14 cone, at 20°C).

8. An aqueous glittering ink as set forth in claim 6 or claim 7, wherein the ink has a viscosity of 1000 - 15000 mPa.s when measured by an ELD-type viscometer (3° R14 cone, rotation speed: 0.5 rpm at 20°C).

9. An aqueous glittering ink as set forth in any preceding claim, wherein the content of the said scaly glittering particles is 0.01 - 40% by weight relative to the total amount of the ink.

10. An aqueous glittering ink as set forth in any preceding claim, which contains from 0.01 to 40% by weight of water soluble resin relative to the total amount of the ink.

11. An aqueous glittering ink as set forth in any preceding claim, which contains a colorant in a proportion of 0.01 - 30% by weight, relative to the total amount of the ink.

12. An aqueous glittering ink as set forth in any preceding claim, further containing an opacifying pigment.

13. An aqueous glittering ink as set forth in claim 4, containing a synthetic resin emulsion as the said binder component in a proportion of 0.01 - 40% by weight solids content relative to the total amount of the ink.

14. An aqueous glittering ink as set forth in claim 13, wherein the content of the said scaly glittering particles is 0.01 - 40% by weight, the water-soluble resin is 0.01 - 40% by weight and the water-soluble organic solvent is 1 - 40% by weight, relative to the total amount of the ink.

15. An aqueous glittering ink composition as set forth in claim 13 or claim 14, wherein the said synthetic resin emulsion is anionic or nonionic and the minimum film forming temperature of the resin is at most 20°C.

## Patentansprüche

1. Wässerige glitzernde Tinte, umfassend schuppige glitzernde Partikel, ein Färbemittel, ein wasserlösliches Verdickungsharz, ein wasserlösliches organisches Lösungsmittel und Wasser, wobei die schuppigen glitzernden Partikel einen mittleren Durchmesser (dass heißt, einen D₅₀ Wert (µm), der durch Laser-Diffraktions-Analyse unter Verwendung einer Ausrüstung, die von Leeds & Northrup unter dem Handelsnamen "Microtrac HRA 9320-X100" hergestellt wird, gemessen wird) von mindestens 10 µm und eine Metalloberfläche besitzen, die schuppigen glitzernden Partikel Aluminiumpartikel sind, und das Verhältnis der Glattheit der Partikeloberfläche (wobei die Glattheit der gemittelte Wert von Rₘₐₓ (µm), dem maximalen Wert der Rauhigkeit, die auf jeder Oberfläche der einzelnen glitzernden Partikel, die pro Einheitsfläche der geschriebenen Zeichen oder beschichteten Filme in einem Zustand der Trockenheit vorhanden sind, unter Verwendung des Elektronenmikroskops, das von ELIONIX INC. unter dem Handelsnamen "ERA-8000" hergestellt wird, gemessen wird, ist) zu dem mittleren Durchmesser höchstens 0,011 beträgt, wobei die Anteile des Färbemittels und der glitzernden Partikel derart sind, dass, wenn ein geschriebenes Zeichen durch die Tinte hergestellt wird, das Färbemittel höchstens 80% der Oberfläche der Partikel bedeckt.

2. Wässerige glitzernde Tinte wie in Anspruch 1 bestimmt, wobei die glitzernden Partikel einen mittleren Durchmesser von mindestens 25 µm besitzen.

3. Wässerige glitzernde Tinte wie in Anspruch 1 bestimmt, wobei die glitzernden Partikel einen mittleren Durchmesser von mindestens 30 µm besitzen.

4. Wässerige glitzernde Tinte wie in einem der Ansprüche 1 bis 3 bestimmt, weiter umfassend eine Bindemittel-Komponente zur Fixierung der schuppigen glitzernden Partikel auf einem geschriebenen oder einem beschichteten Film.

5. Wässerige glitzernde Tinte wie in Anspruch 1 bestimmt, wobei eine Oberfläche der glitzernden Partikel eine glatte metallische Oberfläche ist, auf der einfallendes Licht total reflektiert wird.

6. Wässerige glitzernde Tinte wie in einem der Ansprüche 1 bis 5 bestimmt, wobei die Tinte eine pseudo-plastische Fluidität (thixotrophe Eigenschaft) besitzt.

7. Wässerige glitzernde Tinte wie in Anspruch 6 bestimmt, wobei die Tinte einen T.I. Wert, den Thixotrophie-Index, von nicht weniger als 1,3 besitzt, wie er durch das Verhältnis von V_{0,5} zu V_{1,0} (V_{0,5}/V_{1,0}) dargestellt wird, wobei V_{0,5} die Viskosität bei einer Rotationsgeschwindigkeit von 0,5 rpm ist und V_{1,0} die Viskosität bei einer Rotationsgeschwindigkeit von 1,0 rpm ist, wenn die Tinte mit einem Viskometer vom ELD-Typ (3° R14-Konus, bei 20°C) gemessen wird.

8. Wässerige glitzernde Tinte wie in Anspruch 6 oder Anspruch 7 bestimmt, wobei die Tinte eine Viskosität von 1000 - 15000 mPa•s hat, wenn die Tinte mit einem Viskometer vom ELD-Typ (3° R14-Konus, Rotationsgeschwindigkeit: 0,5 rpm bei 20°C) gemessen wird.

9. Wässerige glitzernde Tinte wie in einem der vorhergehenden Ansprüche bestimmt, wobei der Gehalt der schuppigen glitzernden Partikel 0,01 - 40 Gewichts-% relativ zu der Gesamtmenge der Tinte beträgt.

10. Wässerige glitzernde Tinte wie in einem der vorhergehenden Ansprüche bestimmt, welche von 0,01 bis 40 Gewichts-% an wasserlöslichem Harz relativ zu der Gesamtmenge der Tinte umfasst.

11. Wässerige glitzernde Tinte wie in einem der vorhergehenden Ansprüche bestimmt, welche ein Färbemittel in einem Anteil von 0,01 - 30 Gewichts-% relativ zu der Gesamtmenge der Tinte umfasst.

12. Wässerige glitzernde Tinte wie in einem der vorhergehenden Ansprüche bestimmt, weiter umfassend ein deckendes Pigment.

13. Wässerige glitzernde Tinte wie in Anspruch 4 bestimmt, umfassend eine Emulsion eines synthetischen Harzes als die Bindemittel-Komponente in einem Anteil von 0,01 - 40 Gewichts-% als Feststoffgehalt relativ zu der Gesamtmenge der Tinte.

14. Wässerige glitzernde Tinte wie in Anspruch 13 bestimmt, wobei der Gehalt der schuppigen glitzernden Partikel 0,01 - 40 Gewichts-% beträgt, der des wasserlöslichen Harzes 0,01 - 40 Gewichts-% beträgt und der des wasserlöslichen organischen Lösungsmittels 1 - 40 Gewichts-% beträgt, relativ zu der Gesamtmenge der Tinte.

15. Wässerige glitzernde Tinte wie in Anspruch 13 oder Anspruch 14 bestimmt, wobei die Emulsion eines synthetischen Harzes anionisch oder nicht-ionisch ist und die minimale Filmbildungstemperatur des Harzes höchstens 20°C beträgt.

## Revendications

1. Encre brillante aqueuse comprenant des particules brillantes écailleuses, un colorant, une résine épaississante soluble dans l'eau, un solvant organique soluble dans l'eau, lesdites particules brillantes écailleuses ayant un diamètre moyen (c'est-à-dire une valeur D₅₀ (µm) mesurée par analyse à diffraction laser sur un appareil fabriqué par Leeds & Northrup sous le nom commercial «Microtrac HRA 9320-X100 ») d'au moins 10 µm et une surface métallique, les particules brillantes écailleuses étant des particules d'aluminium, et le rapport entre la régularité de la surface de particule (ladite régularité étant la valeur moyenne de Rₘₐₓ (µm)), la valeur maximale de rugosité mesurée sur chaque surface des différentes particules brillantes existant par surface unitaire des marquages écrits ou des pellicules revêtues à l'état sec en utilisant le microscope à électrons commercialisé par la société ELIONIX INC sous le nom commercial de «ERA-8000») et le diamètre moyen est au maximum 0, 011, les proportions du colorant et des particules brillantes étant telles que lors de la réalisation d'un marquage écrit au moyen de l'encre, le colorant recouvre au maximum 80 % de la surface des particules.

2. Une encre brillante aqueuse selon la revendication 1, dans laquelle lesdites particules brillantes présentes un diamètre moyen d'au moins 25 µm.

3. Une encre brillante aqueuse selon la revendication 1, dans laquelle lesdites particules brillantes présentent un diamètre moyen d'au moins 30 µm

4. Une encre brillante aqueuse selon l'une quelconque des revendications 1 à 3, comprenant en outre une composition formant liant pour fixer lesdites particules brillantes écailleuses sur un marquage écrit ou une pellicule revêtue.

5. Une encre brillante aqueuse selon la revendication 1, dans laquelle une surface desdites particules brillantes est une surface métallique lisse sur laquelle de la lumière incidente se réfléchit totalement.

6. Une encre brillante aqueuse selon l'une quelconque des revendications 1 à 5, dans laquelle l'encre présente une fluidité pseudo-plastique (propriété thixotrope).

7. Une encre brillante aqueuse selon la revendication 6, dans laquelle l'encre présente une valeur de I.T., l'indice de thixotropie, non-inférieure à 1,3 représentée par le rapport de V_{0,5} à V_{1,0} (V_{0,5}/V_{1,0}), dans lequel V_{0,5} est la viscosité à une vitesse de rotation de 0,5 tpm et V_{1,0} est la viscosité à une vitesse de rotation de 1,0 tpm lorsque l'encre est mesurée au moyen d'un viscomètre de type ELD (cône 3° R 14 à 20°C).

8. Une encre brillante aqueuse selon la revendication 6 ou la revendication 7, dans laquelle l'encre présente une viscosité de 1000 à 15 000 MPa.s mesurée au moyen d'un viscomètre de type ELD (cône 3° R14, vitesse de rotation : 0,5 tpm à 20° C).

9. Une encre brillante aqueuse selon l'une quelconque des revendications précédentes, dans lequel la teneur en particules brillantes écailleuses est de 0,01 à 40 % en poids par rapport à la quantité totale de l'encre.

10. Une encre brillante aqueuse selon l'une quelconque des revendications précédentes, qui contient de 0,01 à 40 % en poids de résine soluble dans l'eau par rapport à la quantité totale de l'encre.

11. Une encre brillante aqueuse selon l'une quelconque des revendications précédentes, qui contient un colorant dans une proportion de 0,01 à 30 % en poids par rapport à la quantité totale de l'encre.

12. Une encre brillante aqueuse selon l'une quelconque des revendications précédentes qui contient en outre un pigment opacifiant.

13. Une encre brillante aqueuse selon la revendication 4, contenant une émulsion de résine synthétique en tant que ledit composant formant liant dans une proportion de 0,01 à 40 % en poids de contenu solide par rapport à la quantité totale de l'encre.

14. Une encre brillante aqueuse selon la revendication 13, dans laquelle la teneur en dites particules brillantes écailleuses est de 0,01 à 40 % en poids, celle de la résine soluble dans l'eau est de 0,01 à 40 % en poids et celle du solvant organique soluble dans l'eau est de 1 à 40 % en poids, par rapport à la quantité totale de l'encre.

15. Une composition d'encre brillante aqueuse selon la revendication 13 ou la revendication 14, dans laquelle ladite émulsion de résine synthétique est anionique ou non-ionique et la température minimum de formation de film de la résine est au maximum 20° C.
